# EUROPÄISCHE PATENTSCHRIFT

(11) **EP 3 062 978 B1**
(45) Veröffentlichungstag und Bekanntmachung des Hinweises auf die Patenterteilung: **05.12.2018**
(21) Anmeldenummer: 14795559.5
(22) Anmeldetag: 29.10.2014
(51) Int. Cl.: B29B 9/06, B29B 13/04, B29K 105/00

(54) **GRANULIERVORRICHTUNG MIT SCHNEIDMESSERKOPF**
GRANULATING DEVICE WITH CUTTING KNIFE HEAD
GRANULATEUR ÉQUIPÉ D'UNE TÊTE À LAMES DE COUPE

(30) Priorität: 30.10.2013 DE 102013018239
(43) Veröffentlichungstag der Anmeldung: 07.09.2016
(73) Patentinhaber: Maag Automatik GmbH, 63762 Großostheim (DE)
(72) Erfinder: SOMMER, Joachim, 63500 Seligenstadt (DE)
(74) Vertreter: Spranger, Stephan
(86) Internationale Anmeldenummer: PCT/EP2014/002909
(87) Internationale Veröffentlichungsnummer: WO 2015/062724

(56) Entgegenhaltungen:
- WO-A1-2006/022733
- DE-A1- 1 454 863
- DE-A1- 3 212 409
- DE-U- 1 940 703
- JP-A- H1 076 520
- JP-A- H05 293 799
- JP-A- S61 179 706
- JP-A- 2001 105 429
- JP-U- S48 112 857

## Beschreibung

Die Erfindung betrifft eine Granuliervorrichtung mit einem Schneidmesserkopf zum Auftrennen von Schmelzesträngen in Granulate in einem Granulatorgehäuse. Eine Lochplatte mit Düsenöffnungen, aus denen Schmelzestränge in das Granulatorgehäuse pressbar sind, ragt in das Granulatorgehäuse hinein. Der Schneidmesserkopf, der mindestens ein radial auf seinem Außenumfang angeordnetes Schneidmesser aufweist, wird von einer rotierenden Antriebswelle angetrieben, wobei das Schneidmesser die aus den Düsenöffnungen austretenden Schmelzestränge in Granulate auftrennt. Dabei werden die Granulate durch ein Kühlfluid, das durch eine erste Kühlfluideinlassöffnung in das Granulatorgehäuse eintritt, gekühlt und mit dem Kühlfluid aus einer Auslassöffnung in Form eines Gemisches aus Kühlfluid und Granulaten ausgetragen.

Eine derartige Granuliervorrichtung ist aus der DE 9210621 U1 bekannt und dient dem Granulieren von Kunststoffen, wobei als Kühlfluid Wasser verwendet und die Kühlfluideinlassöffnung von einer Öffnung in einer hohlen Antriebswelle gebildet wird, durch die das Kühlfluid in das Granulatorgehäuse eintritt und mit den Granulaten durch die Auslassöffnung des Granulatorgehäuses austritt.
Ein Nachteil der bekannten Granuliervorrichtung ist der begrenzte Querschnitt der Kühlfluideinlassöffnung in der hohlen Antriebswelle des Schneidmesserkopfes, der den Kühlfluidstrom und damit die Kühlfluidmenge pro Zeiteinheit begrenzt, so dass einerseits die Gefahr besteht, dass die Granulate nicht ausreichend abgekühlt werden, bevor sie der Auslassöffnung zugeführt werden, was zu Klumpenbildungen und Verklebungen an den Wänden des Granulatorgehäuses und an dem Schneidmesserkopf führen kann.
Andererseits besteht ein weiterer Nachteil darin, dass die Kühlfluidzufuhr zum Austrag der Granulate nicht unabhängig von der Kühlfluidzufuhr zu dem Schneidmesserkopf geregelt werden kann, so dass bei überhöhter zentraler Kühlfluidzufuhr zum sicheren Austragen der Granulate aus der Granuliervorrichtung die Gefahr eines Einfrierens des Schmelzestranges in den Düsenöffnungen der Lochplatte besteht, zumal der gesamte Kühlfluidstrom aus Granulataustragsstrom und Granulatkühlungsstrom bei der bekannten Granuliervorrichtung direkt auf die Lochplatte über eine sich trichterförmig öffnende Austrittsöffnung der hohlen Antriebswelle auftrifft.

Aus der Auslegeschrift DE 26 46 309 B2 ist darüber hinaus eine Unterwassergranuliervorrichtung für thermoplastische Kunststoffe bekannt. In dieser Granuliervorrichtung ist der Schneidmesserkopf von einer Haube konzentrisch umschlossen. Ein Teil des Kühlwasserstroms wird außen um die Haube herumgeführt und ein zweiter Teil des Kühlwasserstroms wird über eine Öffnung in der Haube dem Schneidmesserkopf zugeführt. In dem Schneidmesserkopf sind Bohrungen angeordnet, die das Kühlwasser, das in die Haube einströmt, für eine direkte Granulatkühlung bereitstellt. Das Kühlwasser, das außen um die Haube herumfließt, ist für ein Austragen der Granulate aus der Granuliervorrichtung vorsehen.

Ein Nachteil dieser bekannten Unterwassergranuliervorrichtung ist es, dass der Granulataustragsstrom zum Austragen der Granulate aus dem Granulatorgehäuse nicht getrennt von dem Granulatkühlungsstrom, der direkt das Granulat beim Abschlagen kühlen soll, gesteuert werden kann, da beide Kühlfluideinlassöffnungen in einem gemeinsamen Kühlfluideinlassrohr angeordnet sind. Mit dieser bekannten Granuliervorrichtung ist es nicht möglich, einen optimalen Ausgleich zwischen einem Granulataustragsstrom und einem Granulatkühlungsstrom zu schaffen, um einerseits ein Verklumpen des Granulats im Granulataustragsstrom bei zu geringer Kühlung des Granulats zu verhindern und andererseits ein Einfrieren des Schmelzestranges in den Düsenöffnungen der Lochplatte bei zu hohem Granulatkühlungsstrom zu vermeiden.

Ferner ist aus der Offenlegungsschrift DE 1 454 863 eine Vorrichtung zum Schneiden, Kühlen und Wegtransport eines Granulats bekannt, bei der die Antriebswelle eines Schneidmesserkopfes ganz oder teilweise hohl ausgebildet ist und als Zuleitungsrohr für das Kühl- und Austragswasser dient und der Schneidmesserkopf Messerarme aufweist, die ebenfalls hohl ausgebildet sind, so dass das abgeschnittene, in den Messerarm eintretende Granulat in diesem mit einer Wasserspülung wegtransportiert werden kann.

Diese Granuliervorrichtung hat den Nachteil, dass der aus Messerarmen bestehende Schneidmesserkopf äußerst komplex aufgebaut ist und der Querschnitt der Antriebshohlwelle mit dem Schneidmesserkopf begrenzt ist, so dass damit die Kühlfluidmenge pro Zeiteinheit derart begrenzt ist, dass einerseits die Gefahr besteht, dass die Granulate nicht ausreichend abgekühlt werden bevor sie einer Auslassöffnung zugeführt werden, was zu Verklumpungen und Verklebungen sowohl in den Schneidmesserarmen als auch in dem Granulatorgehäuse führen kann.

Andererseits besteht außerdem der Nachteil, dass die Kühlfluidzufuhr zum Austrag von Granulaten nicht unabhängig von der Kühlfluidzufuhr zu dem Schneidmesserkopf geregelt werden kann, so dass bei überhöhter zentraler Kühlfluidzufuhr für einen sicheren Austrag der Granulate aus der Granuliervorrichtung die Gefahr eines Einfrierens des Schmelzestranges in den Düsenöffnungen der Lochplatte besteht, zumal der gesamte Kühlfluidstrom aus Granulataustragsstrom und Granulatkühlungsstrom bei dieser Granuliervorrichtung an den Düsenöffnungen der Lochplatte vorbei geführt wird.

Die Japanische Veröffentlichung Nr. JP H10 76520 A beschreibt eine Anfahrkontrolle eines Unterwassergranulators und den entsprechenden Unterwassergranulator. Vorgesehen ist dort die Temperaturkontrollierte Zuführung eines Kühlmittels über eine zusätzliche zentrale Kühldüse in der dortigen Antriebswelle. Die Anordnung der dortigen Düse ist jedoch mittig in der Antriebswelle, so dass diese nicht mit dem Schneidmesserkopf mit rotiert.

Die japanische Veröffentlichung Nr. JP H05 293799 A beschreibt ein Verfahren, bei welchem Schmelze mit einem rotierenden Schneidkopf im Wasserschneidverfahren zu Granulatkörnern zerteilt wird. Die Austrittsdüse des schneidenden Wasserstrahls rotiert dabei mit dem dortigen Messerkopf, es handelt sich dabei allerdings nicht um ein Kühlfluid.

Die japanische Veröffentlichung Nr. JP S48 112857 U beschreibt eine Unterwassergranulierungsvorrichtung, bei welcher, über eine zentrale Bohrung offenbar zusätzliches Fluid im Bereich des Schneidkopfes zugeführt wird. Auch dort erfolgt die Zuführung zentral und nicht über eine mit rotierende Kühlbohrung und auch nicht über eine Fluidkammer mit stationärem Kühlfluidrohr gemäß der Erfindung.

Die Aufgabe der Erfindung ist es, eine Granuliervorrichtung zu schaffen, die eine zuverlässige Steuerung eines Granulataustragsstroms zum Austragen der Granulate aus dem Granulatorgehäuse gewährleistet, ohne dass durch einen unzureichenden Kühlfluiddurchsatz in einem Granulataustragsstrom ein Granulatstau oder ein Verkleben oder ein Verklumpen der Granulate an Wänden und am Messerschneidkopf auftritt, und eine davon unabhängige Steuerung eines Granulatkühlungsstroms, der eine Kühlung unmittelbar beim Abschlagen der Granulate von den Schmelzesträngen ermöglicht, ohne dass die Gefahr eines Einfrierens der Schmelze in den Düsenöffnungen der Lochplatte auftreten kann.
Diese Aufgabe wird erfindungsgemäß mit einer Granuliervorrichtung mit den Merkmalen gemäß dem Anspruch 1 gelöst. Bevorzugte Ausführungsformen der Erfindung sind in den Unteransprüchen definiert.
Eine Ausführungsform der Erfindung betrifft eine Granuliervorrichtung mit einem Schneidmesserkopf zum Auftrennen von Schmelzesträngen in Granulate in einem Granulatorgehäuse. Eine Lochplatte mit Düsenöffnungen, aus denen Schmelzestränge in das Granulatorgehäuse pressbar sind, ragt in das Granulatorgehäuse hinein. Der Schneidmesserkopf, der mindestens ein radial auf seinem Außenumfang angeordnetes Schneidmesser aufweist, wird von einer rotierenden Antriebswelle angetrieben. Das Granulatorgehäuse weist eine erste Kühlfluideinlassöffnung und eine Auslassöffnung für einen Granulataustragsstrom mit einem Gemisch aus Kühlfluid und Granulaten auf. Ferner weist das Granulatorgehäuse eine von der ersten Kühlfluideinlassöffnung unabhängige zweite Kühlfluideinlassöffnung auf, die über eine Kühlfluidkammer und ein koaxial zur Antriebswelle ausgerichtetes stationäres Kühlfluidrohr mindestens eine mitrotierende Kühldüsenbohrung in dem Schneidmesserkopf mit einem Granulatkühlungsstrom für eine unmittelbare Granulatkühlung versorgt.

Ein entscheidender Vorteil dieser Erfindung ist es, dass die Granuliervorrichtung eine erste Fluideinlassöffnung aufweist, über die ein Granulataustragsstrom in Bezug auf Temperatur und Durchflussmenge gesteuert werden kann, und zwar unabhängig von einem Granulatkühlungsstrom, der unmittelbar über die Kühldüsenöffnungen des Schneidkopfes eine Granulatkühlung ermöglicht. Die Unabhängigkeit wird dadurch erreicht, dass eine zweite Kühlfluideinlassöffnung vorgesehen ist, die unabhängig von der ersten Kühlfluideinlassöffnung mit unterschiedlicher Temperatur und unterschiedlicher Kühlfluidmenge pro Zeiteinheit beaufschlagt werden kann. Dadurch ist es möglich, unabhängig voneinander einen Granulataustragsstrom über die erste Kühlfluideinlassöffnung und einen Granulatkühlungsstrom über die zweite Kühlfluideinlassöffnung zu steuern bzw. zu regeln, um optimale Betriebsbedingungen in der Granuliervorrichtung in den unterschiedlichen Betriebsphasen wie Einlaufphase, Produktionsphase und Auslaufphase zu schaffen, ohne dass Betriebsstörungen durch Einfrieren von Schmelzesträngen in den Düsenöffnungen der Lochplatte oder ein Verklumpen und Verkleben durch nicht ausreichend gekühlte Granulate auftreten.

In einer weiteren Ausführungsform der Erfindung ist es vorgesehen, dass die Kühlfluidkammer mit der zweiten Kühlfluideinlassöffnung und dem koaxial zur Antriebswelle ausgerichteten stationären Kühlfluidrohr als Zusatzeinrichtung an das Granulatorgehäuse angeflanscht ist. Diese Ausführungsform der Erfindung hat den Vorteil, dass ein einheitliches Granulatorgehäuse vorgesehen werden kann, an das unterschiedliche Zusatzeinrichtungen anflanschbar sind, wobei sowohl die Dimensionen der Kühlfluidkammer dieser Zusatzeinrichtungen als auch die Anzahl der zweiten Kühlfluideinlassöffnungen sowie die Anzahl der Kühlfluidrohre zum Zuführen von Kühlfluid direkt zu der Rückseite des Schneidmesserkopfes variieren können.

In einer weiteren Ausführungsform ist es vorgesehen, dass die Kühlfluidkammer mindestens eine mediendichte Drehdurchführung der Antriebswelle aufweist. Damit kann in vorteilhafter Weise ein Antriebsmotor außerhalb der Kühlfluidkammer und auch außerhalb des Granulatorgehäuses angeordnet werden, wobei die Antriebswelle über die Drehdurchführung durch die Kühlfluidkammer und das Kühlfluidrohr hindurchragt und den Schneidmesserkopf trägt, der mit der Antriebswelle rotiert.

In einer weiteren Ausführungsform ist es vorgesehen, dass die Kühlfluidkammer einen ringförmigen Wandabschnitt aufweist, wobei in dem Wandabschnitt die zweite Kühlfluideinlassöffnung angeordnet ist, so dass Kühlfluid in diesem Wandabschnitt unabhängig von dem Granulataustragsstrom durch das Granulatorgehäuse der Kühlfluidkammer zugeführt werden kann.

Zum Granulatorgehäuse hin weist die Kühlfluidkammer einen Trennflansch auf. Dabei weist dieser Trennflansch eine die Antriebswelle beabstandet umgebende zentrale Öffnung auf. Auf dieser zentralen Öffnung ist ein erstes Ende des koaxialen Kühlfluidrohres mediendicht bzw. kühlfluiddicht angebracht. Somit bildet die Kühlfluidkammer eine von dem Granulataustragsstrom in dem Granulatorgehäuse unabhängige Möglichkeit, einen Kühlfluidstrom zu den mitrotierenden Kühldüsenbohrungen in dem Schneidmesserkopf in einen Bereich zu führen und die Granulatkühlung zu steuern, in dem unmittelbar die Granulate von den aus den Düsenöffnungen der Lochplatte austretenden Schmelzestränge abgetrennt werden.

Weiterhin kann eine derartige Kühlfluidkammer mit Hilfe des Trennflansches als Nachrüstbausatz oder Nachrüsteinrichtung an herkömmliche Granulatorgehäuse angeflanscht werden, um den Granulierungsprozess besser steuern zu können, ohne das herkömmliche Granulatorgehäuse austauschen oder neu konstruieren zu müssen.

Um das Kühlfluid mit Hilfe des stationären koaxialen Kühlfluidrohres der Rückseite des Schneidmesserkopfes zuführen zu können, erstreckt sich das Kühlfluidrohr der Kühlfluidkammer durch das Granulatorgehäuse bis zu der Rückseite des Schneidmesserkopfes. Dort bildet das Kühlfluidrohr mit der Rückseite des Schneidmesserkopfes einen ringförmigen Schlitz, über den zwar ein Teil des zugeführten Kühlfluidstroms in das Granulatorgehäuse abgegeben wird, aber dennoch kann durch geeignete Dimensionierung der Schlitzgröße im Verhältnis zu Anzahl und Durchmesser der Kühldüsenbohrungen ein höherer Anteil des Kühlfluidstroms über die Kühldüsenbohrungen in dem Schneidmesserkopf direkt an die Schneidmesser und somit an den Entstehungsort von Granulaten als Granulatkühlungsstrom geführt werden. Dabei ist der Innenradius des koaxialen Kühlfluidrohres kleiner oder gleich dem Außenradius des Schneidmesserkopfes auf seiner Rückseite und größer als ein äußerer Rotationsradius der mitrotierenden mindestens einen Kühldüsenöffnung.

Vorzugsweise weist der Schneidmesserkopf mehrere auf einem Außenumfang verteilt angeordnete Schneidmesser auf und in einer weiteren Ausführungsform der Erfindung ist jedem der Schneidmesser eine Kühldüsenbohrung zugeordnet. Derartige Kühldüsenbohrungen können entweder parallel zu der Antriebswelle ausgerichtet sein oder eine geneigte Achse aufweisen mit einem entsprechenden Neigungswinkel zu der Ausrichtung der Antriebswelle. Ein derartiger Neigungswinkel kann zwischen 10° und 60° liegen, vorzugsweise liegt er zwischen 15° und 30°. Auch eine Führung des Kühlfluids in Kühldüsenbohrungen mit einem Winkel von 90° könnte denkbar sein, wobei diese Bohrungen dann im Wesentlichen radial nach außen gerichtet bevorzugt im Bereich des Außenumfangs angeordnet sein könnten und mit ihrem jeweiligen radial innen liegenden Abschnitt in Fluidverbindung zum Kühlfluidrohr stehen.

Als Kühlfluid kann eine Kühlflüssigkeit in Form von Kühlwasser mit Frostschutzzusätzen und/oder in Form von Kühlwasser mit einem Rostschutzemulsionen eingesetzt werden. Andererseits ist als Kühlfluid auch ein Kühlgas möglich wie beispielsweise Kühlluft. Die Kühlluft kann dabei unter entsprechend hohem Druck als Granulataustragsluftstrom über die erste Kühlfluideinlassöffnung dem Granulatorgehäuse zugeführt werden. Zusätzlich kann die Kühlluft unabhängig von dem Granulataustragsluftstrom als Granulatkühlungsstrom über die zweite Kühlfluideinlassöffnung einer Kühlfluidkammer und dem Kühlfluidrohr zugeführt werden und durch die Kühldüsenbohrungen in dem Schneidmesserkopf direkt beim Abtrennungsvorgang der Schmelzestränge zu Granulaten einen hochwirksamen Kühlluftstrom im Bereich der Schneidmesser aufrecht erhalten.

In einer weiteren Ausführungsform der Erfindung ist es vorgesehen, dass die Granuliervorrichtung drei voneinander unabhängige mit Kühlfluid versorgte Kühlfluideinlassöffnungen aufweist. Zwei von diesen Kühlfluideinlassöffnungen führen in die Kühlfluidkammer. Jede Kühlfluideinlassöffnung der Kühlfluidkammer steht jeweils mit koaxial zueinander und koaxial zur Antriebswelle ausgerichteten stationären Kühlfluidrohren in Fluidverbindung. Die beiden koaxial ausgerichteten Kühlfluidrohre stehen mit mehreren auf zwei konzentrischen Kreisen angeordneten mitrotierenden Kühldüsenbohrungen in dem Schneidmesserkopf in Fluidverbindung. Bei einer derartigen Granuliervorrichtung ist es möglich, radial den Gradienten der Kühltemperatur auf der Frontseite des Schneidmesserkopfes und an der Lochplatte zu variieren.

In einer weiteren Ausführungsform der Erfindung können auf mehreren konzentrischen Kreisen angeordnete Schneidmesser auf dem Schneidmesserkopf angebracht sein, die über entsprechende auf konzentrischen Kreisen angeordnete mitrotierende Kühldüsenbohrungen gekühlt werden. Somit besteht die Möglichkeit, die von diesen Schneidmessern abgetrennten Granulate in der Schneidposition direkt und individuell zu kühlen. Das heißt, dass die Kühlung der Granulate für jeden Schneidmesserring unabhängig über die unterschiedlichen Kühlfluideinlassöffnungen der Kühlfluidkammer gesteuert und geführt werden kann. Auch die Anordnung mit mehreren Messern, welche in ihrer radialen Ausdehnung jeweils einheitlich den gesamten Bereich der konzentrischen Kreise unterschiedlichen Durchmessers überstreichen, ist denkbar.

Die Erfindung wird im Folgenden anhand der beispielhaft erläuterten Ausführungsformen näher beschrieben werden.
- Figur 1: zeigt eine schematische teilweise quergeschnittene Ansicht einer Granuliervorrichtung gemäß einer ersten Ausführungsform der Erfindung,
- Figur 1A: zeigt eine Draufsicht auf einen Schneidmesserkopf mit zugeordneten Kühldüsenbohrungen gemäß der Figur 1,
- Figur 2: zeigt eine schematische teilweise quergeschnittene Ansicht einer Granuliervorrichtung gemäß einer zweiten Ausführungsform der Erfindung,
- Figur 2A: zeigt eine Draufsicht auf einen Schneidmesserkopf mit zugeordneten Kühldüsenbohrungen gemäß der Figur 2,
- Figur 3: zeigt eine schematische teilweise quergeschnittene Ansicht einer Granuliervorrichtung gemäß einer dritten Ausführungsform der Erfindung,
- Figur 4: zeigt eine schematische teilweise quergeschnittene Ansicht einer Granuliervorrichtung gemäß einer vierten Ausführungsform der Erfindung.
- Figur 5: zeigt eine schematische teilweise quergeschnittene Ansicht einer Modifizierung einer Granuliervorrichtung der zweiten Ausführungsform der Erfindung.

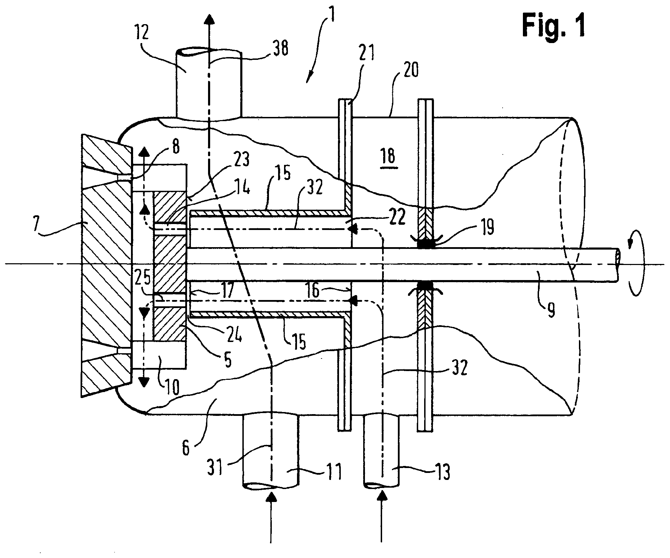

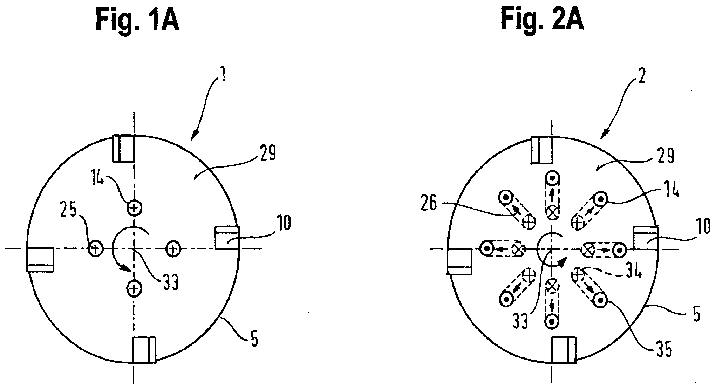

Figur 1 zeigt eine schematische teilweise quergeschnittene Ansicht einer Granuliervorrichtung 1 gemäß einer ersten Ausführungsform der Erfindung. Die Granuliervorrichtung 1 weist einen Schneidmesserkopf 5 zum Auftrennen von Schmelzesträngen in Granulate in einem Granulatorgehäuse 6 auf. Eine Lochplatte 7 mit Düsenöffnungen 8 ragt in das Granulatorgehäuse 6 hinein. Der Schneidmesserkopf 5 weist radial auf seinem Außenumfang angeordnete Schneidmesser 10 auf, die von einer rotierenden Antriebswelle 9 angetrieben werden und entlang der Düsenöffnungen der Lochplatte zum Auftrennen von Schmelzesträngen in Granulate gleiten. Das Granulatorgehäuse 6 weist eine erste Kühlfluideinlassöffnung 11 auf, die ein Kühlfluid wie Kühlwasser, das mit Rostschutzemulsionen oder mit Frostschutzmitteln angereichert sein kann, in das Kühlgehäuse einlässt, wobei das Kühlfluid die abgetrennten Granulate über eine Auslassöffnung 12 aus dem Granulatorgehäuse 6 austrägt. In Figur 1 ist der Verlauf eines Granulataustragsstroms 38 von der ersten Kühlfluideinlassöffnung 11, in die ein granulatfreier Einlassfluidstrom 31 einströmt bis zur Auslassöffnung 12 aus der mit Granulaten angereicherter Einlassfluidstrom als Granulataustragsstrom 38 ausströmt mit einer strichpunktierten Linie markiert. Zusammen mit dem Granulataustragsstrom strömt auch der Granulatkühlungsstrom 32 aus.

Der Schneidmesserkopf 5 weist Kühldüsenbohrungen 14 auf, deren Achsen 25 in dieser ersten Ausführungsform der Erfindung parallel zu der Antriebsachse 9 ausgerichtet sind. Ein stationäres Kühlfluidrohr 15 versorgt die mitrotierenden Kühlfluidbohrungen 14 des Schneidmesserkopfes 5 mit dem Kühlfluid. Um die Versorgung der mitrotierenden Kühlfluidbohrungen 14 mit Kühlfluid sicherzustellen, ist der Innenradius des koaxialen Kühlfluidrohres 15 kleiner oder gleich dem Außenradius des Schneidmesserkopfes 5 auf seiner Rückseite 23 und größer als ein äußerer Rotationsradius der mitrotierenden Kühldüsenbohrungen 14.

Zwischen dem stationären Kühlfluidrohr 15 und der Rückseite 23 des rotierenden Schneidmesserkopfes 5 verbleibt ein ringförmiger Schlitz 24, durch den Kühlfluid in das Granulatorgehäuse 6 und damit in den Granulataustragsstrom 38 entweicht. Dieser entweichende Anteil eines Granulatkühlungsstroms 32, der mit einer doppeltpunktierten-gestrichelten Linie gekennzeichnet ist, steht nicht mehr für eine direkte Kühlung am Auftrennungsort der aus den Düsenöffnungen 8 der Lochplatte 7 austretenden Schmelzestränge zu Granulaten zur Verfügung.

Ein erstes Ende 16 des Kühlfluidrohres 15 das dem zweiten Ende 17 im Bereich der Rückseite 23 des Schneidmesserkopfes 5 gegenüberliegt ist mit einem Trennflansch 21, der das Granulatorgehäuse 6 von einer Kühlfluidkammer 18 trennt, mediendicht bzw. kühlfluiddicht verbunden. Dazu weist der Trennflansch 21 eine koaxial zu der Antriebswelle 9 angeordnete zentrale Öffnung 22 auf.

Ein ringförmiger Wandabschnitt 20 umgibt die Kühlfluidkammer 18, wobei eine zweite Kühlfluideinlassöffnung 13 in dem Wandabschnitt 20 angeordnet ist, die unabhängig von der ersten Kühlfluideinlassöffnung 11 mit Kühlfluid versorgt wird, so dass der Granulatkühlungsstrom 32, unabhängig von dem Granulataustragsstrom 38 die Granulate im Bereich der Schneidmesser 10 unmittelbar mit Kühlfluid über das Kühlfluidrohr 15 und die Kühldüsenbohrungen 14 versorgen kann.

Über eine mediendichte Drehdurchführung 19 passiert die Antriebswelle 9 die Kühlfluidkammer 18 und das Granulatorgehäuse 6 bis hin zu einer drehfesten Verbindung mit der Rückseite 23 des Schneidmesserkopfes 5. Weil der Granulatkühlungsstrom 32 von der Lochplatte 7 aus einer Richtung parallel zur Antriebswelle 9 in eine zentrifugale Richtung umgelenkt wird, werden die Granulate unmittelbar beim Abtrennen einer intensiven Granulatkühlung ausgesetzt. Davon unabhängig umspült der Granulataustragsstrom 38 das stationäre Kühlfluidrohr 15 und den rotierenden Schneidmesserkopf 5 unter Aufnahme und Austragung der entstandenen Granulate. Der Granulatkühlungsstrom 32 verläßt das Granulatorgehause 6 allerdings auch, wie der Granulataustragsstrom 38 zusammen mit diesem, über die Auslassöffnung 12 und kann somit dort auch dem Granulattransport bzw. auch der Granulatkühlung dort zur Verfügung stehen.

Figur 1A zeigt eine Draufsicht auf einen Schneidmesserkopf 5 mit zugeordneten Kühldüsenbohrungen 14, deren Achsen auf einem Kreis um die Rotationsachse 33 des Schneidmesserkopf 5 angeordnet sind. Dabei ist in dieser ersten Ausführungsform der Erfindung jedem Schneidmesser 10 eine Kühldüsenbohrung 14 auf der Frontseite 29 des Schneidmesserkopfes 5 zugeordnet.

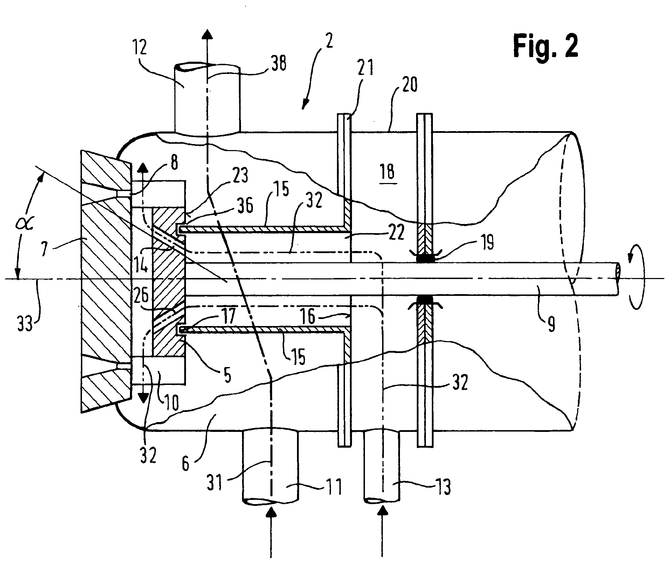

Figur 2 zeigt eine schematische teilweise quergeschnittene Ansicht einer Granuliervorrichtung 2 gemäß einer zweiten Ausführungsform der Erfindung. Komponenten mit gleichen Funktionen wie in Figur 1 werden in den nachfolgenden Figuren mit gleichen Bezugszeichen gekennzeichnet und nicht extra erörtert.

Diese zweite Ausführungsform der Erfindung unterscheidet sich von der ersten Ausführungsform gemäß Figur 1 dadurch, dass die Achsen 26 der Kühldüsenbohrungen 14 nicht parallel zur Antriebswelle 9 ausgerichtet sind, sondern in einem Winkel α geneigt zu der Rotationsachse 33 des Schneidmesserkopfes 5 angeordnet sind. Der Neigungswinkel α kann dabei zwischen 10° und 60° variieren, wobei ein bevorzugter Bereich für den Winkel α zwischen 15° und den in Figur 2 gezeigten 30° liegt.

Durch die Neigung der Achsen 26 der Kühldüsenbohrungen 14 ist der Granulatkühlungsstrom stärker auf den Außenrand des rotierenden Schneidmesserkopfes 5 gerichtet, wodurch die Lochplatte 7 in ihrem Zentrum geringer mit Kühlfluid beaufschlagt wird. Im Prinzip kann damit ein höherer Temperaturgradient zwischen Zentrum und Außenrand der Lochplatte 7 erreicht werden. Weiterhin ist in dieser zweiten Ausführungsform eine Labyrinthdichtung 36 zwischen dem zweiten Ende 17 des Kühlfluidrohres 15 und einer Ringnut in der Rückseite 23 des Schneidmesserkopfes 5 ausgebildet. Durch diese Labyrinthdichtung 36 verringert sich der Anteil an Granulatkühlungsstrom 32, der nicht die Lochplatte 7 erreicht, so dass die Granulatkühlung verbessert wird.

Figur 2A zeigt eine Draufsicht auf einen Schneidmesserkopf 5 mit zugeordneten Kühldüsenbohrungen 14 gemäß Figur 2. Aufgrund der Neigung der Kühldüsenbohrungen 14 gegenüber der Rotationsachse 33 des Schneidmesserkopfes 5 liegen die Einlassöffnungen 34 auf der Rückseite des Schneidmesserkopfes 5 auf einem Kreisring mit geringerem Radius als die Auslassöffnungen 35. Außerdem ist bei dieser zweiten Ausführungsform der Erfindung vorgesehen, dass nicht nur auf jedes Schneidmesser 10 eine Kühldüsenbohrung 14 ausgerichtet ist, sondern dazwischenliegend geneigte Kühldüsenbohrungen 14 angeordnet sind, welche die zentrifugale Ausrichtung des Granulatkühlungsstroms zwischen Lochplatte und Schneidmesserkopf 5 verstärken.

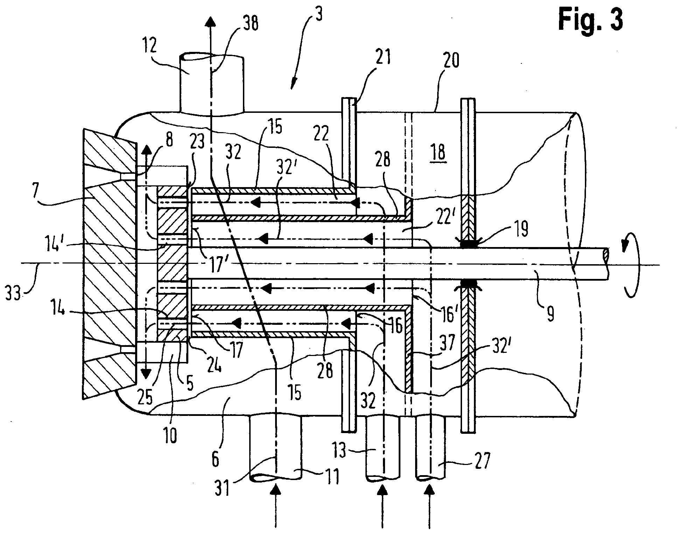

Figur 3 zeigt eine schematische teilweise quergeschnittene Ansicht einer Granuliervorrichtung 3 gemäß einer dritten Ausführungsform der Erfindung. Diese dritte Ausführungsform der Erfindung unterscheidet sich von den vorhergehenden Ausführungsformen gemäß Figur 1 und Figur 2 dadurch, dass die Kühlfluidkammer 18 zwei voneinander unabhängige Kühlfluideinlassöffnungen 13 und 27 aufweist. Mit diesen Kühlfluideinlassöffnungen 13 und 27 können voneinander unabhängige Granulatkühlungsströme 32 bzw. 32' entsprechenden Kühldüsenbohrungen 14 bzw. 14' über zwei koaxial zueinander angeordnete Kühlfluidrohre 15 und 28 zugeführt werden, wobei die Kühldüsenbohrungen 14 und 14' auf unterschiedlichen Kreisradien des rotierenden Schneidmesserkopfes 5 angeordnet sind und dabei einerseits die Kühldüsenbohrungen 14 von einem ersten Kühldüsenrohr 15 mit Kühlfluid versorgt werden und die Kühldüsenbohrungen 14' unabhängig von den ersten Kühldüsenbohrungen 14 von einem zweiten Kühlfluidrohr 28 mit Kühlfluid, das über die Kühlfluideinlassöffnung 27 der Kühlfluidkammer 18 zugeführt wird, versorgt werden.

Während das erste Kühlfluidrohr 15 sich von einem ersten Ende 16 bis zu einem zweiten Ende 17 erstreckt, erstreckt sich das zweite Kühlfluidrohr 28 von einem ersten Ende 16' bis zu einem zweiten Ende 17'. Das erste Ende 16' ist mediendicht bzw. kühlfluiddicht mit einer zentralen Öffnung 22' verbunden, die zentral in einer scheibenförmigen Trennwand 37 innerhalb der Kühlfluidkammer 18 angeordnet ist. Diese Trennwand 37 trennt den mit Doppelpunkt gestrichelten Granulatkühlungsstrom 32 von dem mit Dreipunkt gestrichelten Granulatkühlungsstrom 32'. Mit dieser Granuliervorrichtung 3 kann somit deutlich präziser ein Temperaturgradient zwischen Rotationsachse 33 und den Schneidmessern 10 geregelt werden.

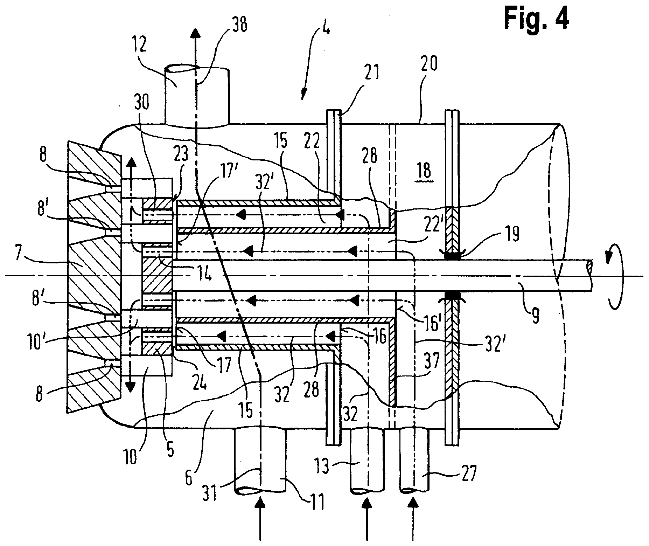

Figur 4 zeigt eine schematische teilweise quergeschnittene Ansicht einer Granuliervorrichtung 4 gemäß einer vierten Ausführungsform der Erfindung. In dieser vierten Ausführungsform der Erfindung sind in der Lochplatte 7 zwei kreisringförmig angeordnete Düsenöffnungen 8 und 8' vorgesehen. Dementsprechend sind auf dem Schneidmesserkopf 5 auch zwei Reihen von auf konzentrischen Kreisen zueinander angeordnete Schneidmesser 10 und 10' vorgesehen. Zu diesen Schneidmessern 10 und 10' werden wie in Figur 3 gezeigt zwei getrennte unabhängige Granulatkühlungsströme 32 und 32' über die Kühlfluideinlassöffnung 13 bzw. die Kühlfluideinlassöffnung 27 zu den jeweils zugeordneten Kühlfluidbohrungen 14 bzw. 30 geführt. Somit können die Schneidmesser 10 und 10' unabhängig voneinander mit Granulatkühlungsströmen unterschiedlicher Temperatur, unterschiedlichem Druck sowie unterschiedlicher Strömungsgeschwindigkeit beaufschlagt werden.

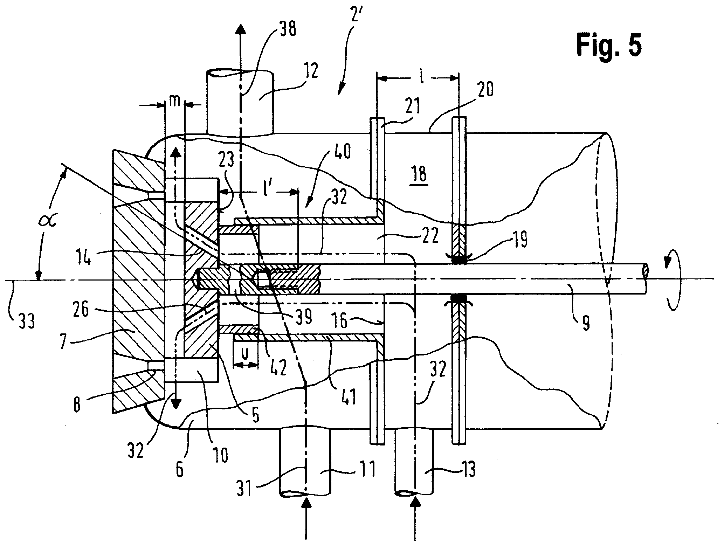

Figur 5 zeigt eine schematische teilweise quergeschnittene Ansicht einer Granuliervorrichtung 2' einer Modifizierung der zweiten Ausführungsform der Erfindung, wie sie Figur 2 zeigt. Die Granuliervorrichtung 2' weist zum Ausgleich des Schneidmesserverschleißes keine Nut einer Labyrinthdichtung wie Figur 2 auf, in die das Kühlfluidrohr unterschiedlich tief in Abhängigkeit vom Schneidmesserverschleiß hineinragen kann.

Bei dieser erfindungsgemäßen Modifikation wird an Stelle eines einstückigen stationären Kühlfluidrohres ein Kühlfluidteleskoprohr 40 eingesetzt, das aus einem ersten stationären Rohrabschnitt 41, der mit dem Trennflansch 21 der Kühlfluidkammer 18 mediendicht bzw. kühlfluiddicht verbunden ist und einem mit dem Schneidmesserkopf 5 mitrotierendem zweiten Rohrabschnitt 42 besteht. Der zweite mitrotierende Rohrabschnitt 42 kann auch ein integraler Bestandteil des Schneidmesserkopfes 5 oder ein mit dem Schneidmesserkopf 5 stoffschlüssig verbundener Rohrabschnitt sein. Die teleskopartige Überlappungslänge u der Rohrabschnitte 41 und 42 ist dabei größer als die maximal mögliche Verschleißlänge m der Schneidmesser 10. Auch muss der Freiraum der Freiraum von der Rückseite des Messerträgers bzw. des Schneidmesserkopfs 5 bis zur Vorderkante des Rohrabschnitts 41 größer sein als der maximal mögliche Hub des Schneidmesserkopfs 5 in axiale Richtung

Ein weiterer Unterschied der modifizierten Granuliervorrichtung 2' gegenüber der Granuliervorrichtung 2 der zweiten Ausführungsform gemäß Figur 2 besteht darin, dass an Stelle eines Austausches der Antriebswelle 9 durch eine längere durchgängige Antriebswelle zum Ausgleich der zusätzlichen Länge l des an das Granulatorgehäuse 6 angeflanschten Wandabschnitts 20 der Kühlfluidkammer 18 ein Antriebswellenverlängerungsstück 39 mit der Länge l' vorgesehen ist. Dazu ist die Länge l' der Länge l des Wandabschnitts 20 angepasst und vorzugsweise gleich der Länge l. An Stelle der hier gezeigten lösbaren Gewindeverbindung zwischen der Antriebswelle 9 und dem Antriebswellenverlängerungsstück 39 kann auch ein Steckverschluss wie ein Bajonettverschluss vorgesehen werden.
Mit der Modifikation gemäß Figur 5 ist ein erfindungsgemäßer Betrieb einer entsprechend ausgestatteten Granuliervorrichtung möglich, ebenso wie bei Weglassen dieser Modifikation (Wandabschnitt 20 sowie Antriebswellenverlängerungsstück 39) ein Betrieb in Standardkonfiguration einer Granuliervorrichtung ohne erfindungsgemäße zweite Kühlfluidversorgung möglich ist.

### Bezugszeichenliste

- 1: Granuliervorrichtung (1. Ausführungsform)
- 2: Granuliervorrichtung (2. Ausführungsform)
- 3: Granuliervorrichtung (3. Ausführungsform)
- 4: Granuliervorrichtung (4. Ausführungsform)
- 5: Schneidmesserkopf
- 6: Granulatorgehäuse
- 7: Lochplatte
- 8: Düsenöffnung der Lochplatte
- 8': Düsenöffnung
- 9: Antriebswelle
- 10: Schneidmesser
- 10': Schneidmesser
- 11: erste Kühlfluideinlassöffnung
- 12: Auslassöffnung
- 13: zweite Kühlfluideinlassöffnung
- 14: Kühldüsenbohrung
- 14': Kühldüsenbohrung
- 15: Kühlfluidrohr
- 16: erstes Ende des Kühlfluidrohres
- 16': erstes Ende
- 17: zweites Ende des Kühlfluidrohres
- 17': zweites Ende
- 18: Kühlfluidkammer
- 19: Drehdurchführung als Wellendichtung
- 20: Wandabschnitt
- 21: Trennflansch
- 22: zentrale Öffnung
- 22': Öffnung
- 23: Rückseite des Schneidmesserkopfes
- 24: ringförmiger Schlitz
- 25: Achse
- 26: geneigte Achse
- 27: dritte Kühlfluideinlassöffnung
- 28: zweites Kühlfluidrohr
- 29: Frontseite
- 30: Kühldüsenbohrung
- 31: Einlassfluidstrom
- 32: Granulatkühlungsstrom
- 32': Granulatkühlungsstrom
- 33: Rotationsachse
- 34: Einlassöffnung
- 35: Auslassöffnung
- 36: Labyrinthdichtung
- 37: Trennwand
- 38: Granulataustragsstrom
- 39: Antriebswellenverlängerungsstück
- 40: Teleskopkühlfluidrohr
- 41: erster Rohrabschnitt des Teleskopkühlfluidrohrs
- 42: zweiter Rohrabschnitt des Teleskopkühlfluidrohrs
- α: Neigungswinkel
- l: Länge des angeflanschten Wandabschnitts der Kühlfluidkammer
- l': Länge des Antriebswellenverlängerungsstücks
- m: Messerlänge
- u: Überlappungslänge der Rohrabschnitte

## Patentansprüche

1. Granuliervorrichtung mit einem Schneidmesserkopf (5) zum Auftrennen von Schmelzesträngen in Granulate in einem Granulatorgehäuse (6), aufweisend:
- eine Lochplatte (7) mit Düsenöffnungen (8), aus denen Schmelzestränge in das Granulatorgehäuse (6) pressbar sind,
- eine rotierende Antriebswelle (9), die den Schneidmesserkopf (5) antreibt, der mindestens ein radial auf seinem Außenumfang angeordnetes Schneidmesser (10) aufweist,
- eine erste Kühlfluideinlassöffnung (11) in das Granulatorgehäuse (6) und eine Auslassöffnung (12) eines Gemisches aus Kühlfluid und Granulaten aus dem Granulatorgehäuse (6),
- und eine von der ersten Kühlfluideinlassöffnung (11) unabhängig versorgte zweite Kühlfluideinlassöffnung (13),
**dadurch gekennzeichnet, dass**
- der Schneidmesserkopf (5) mindestens eine in einem Rotationsradius mitrotierende Kühldüsenbohrung (14) aufweist, und dass
- die zweite Kühlfluideinlassöffnung (13) über eine Kühlfluidkammer (18) und ein koaxial zur Antriebswelle (9) ausgerichtetes stationäres, mit dem Granulatorgehäuse (6) über einen Trennflansch (21) mediendicht bzw. kühlfluiddicht verbundenes Kühlfluidrohr (15) mit der rotierenden Kühldüsenbohrung (14) in Fluidverbindung steht.

2. Granuliervorrichtung nach Anspruch 1,
**dadurch gekennzeichnet, dass**
die Kühlfluidkammer (18) mit der zweiten Kühlfluideinlassöffnung (13) und dem koaxial zur Antriebswelle (9) ausgerichteten stationären Kühlfluidrohr (15) als Zusatzeinrichtung an das Granulatorgehäuse (6) angeflanscht ist.

3. Granuliervorrichtung nach Anspruch 1 oder Anspruch 2,
**dadurch gekennzeichnet, dass**
die Kühlfluidkammer (18) mindestens eine mediendichte Drehdurchführung (19) der Antriebswelle (9) aufweist.

4. Granuliervorrichtung nach einem der vorhergehenden Ansprüche,
**dadurch gekennzeichnet, dass**
die Kühlfluidkammer (18) einen ringförmigen Wandabschnitt (20) aufweist, wobei in dem Wandabschnitt (20) die zweite Kühlfluideinlassöffnung (13) angeordnet ist.

5. Granuliervorrichtung nach einem der vorhergehenden Ansprüche,
**dadurch gekennzeichnet, dass**
die Kühlfluidkammer (18) einen Trennflansch (21) zum Granulatorgehäuse (6) hin aufweist.

6. Granuliervorrichtung nach Anspruch 5,
**dadurch gekennzeichnet, dass**
der Trennflansch (21) eine die Antriebswelle (9) beabstandet umgebende zentrale Öffnung (22) aufweist.

7. Granuliervorrichtung nach Anspruch 6,
**dadurch gekennzeichnet, dass**
auf der zentralen Öffnung (22) ein erstes Ende (16) des koaxialen Kühlfluidrohres (15) mediendicht bzw. kühlfluiddicht angebracht ist.

8. Granuliervorrichtung nach einem der Ansprüche 2 bis 7,
**dadurch gekennzeichnet, dass**
sich das koaxiale Kühlfluidrohr (15) durch das Granulatorgehäuse (6) bis zu einer Rückseite (23) des Schneidmesserkopfes (5) erstreckt.

9. Granuliervorrichtung nach Anspruch 8,
**dadurch gekennzeichnet, dass**
zwischen einem zweiten Ende (17) des stationären koaxialen Kühlfluidrohres (15) und der Rückseite (23) des rotierenden Schneidmesserkopfes (5) ein ringförmiger Schlitz (24) angeordnet ist.

10. Granuliervorrichtung nach einem der vorhergehenden Ansprüche,
**dadurch gekennzeichnet, dass**
der Innenradius des stationären koaxialen Kühlfluidrohres (15) kleiner oder gleich dem Außenradius des Schneidmesserkopfes (5) ist.

11. Granuliervorrichtung nach einem der vorhergehenden Ansprüche,
**dadurch gekennzeichnet, dass**
der Schneidmesserkopf (5) mehrere auf einem Außenumfang verteilt angeordnete Schneidmesser (10) aufweist und jedem der Schneidmesser (10) eine Kühldüsenbohrung (14) zugeordnet ist.

12. Granuliervorrichtung nach einem der Ansprüche 1 bis 11,
**dadurch gekennzeichnet, dass**
eine Achse (25) der mindestens einen Kühldüsenbohrung (14) parallel zu der Antriebswelle (9) ausgerichtet ist.

13. Granuliervorrichtung nach einem der vorhergehenden Ansprüche,
**dadurch gekennzeichnet, dass**
eine geneigte Achse (26) der mindestens einen Kühldüsenbohrung (14) einen Neigungswinkel (α) zu der Antriebswelle (9) aufweist.

14. Granuliervorrichtung nach einem der Ansprüche 1 bis 11,
**dadurch gekennzeichnet, dass**
die Granuliervorrichtung (3, 4) drei voneinander unabhängige mit Kühlfluid versorgte Kühlfluideinlassöffnungen (11, 13, 27) aufweist, wovon zwei Kühlfluideinlassöffnungen (13, 27) die Kühlfluidkammer (18) aufweist und jede Kühlfluideinlassöffnung (13, 27) der Kühlfluidkammer (18) mit koaxial zueinander und koaxial zur Antriebswelle (9) ausgerichteten stationären Kühlfluidrohren (15, 28) in Fluidverbindung steht, wobei die Kühlfluidrohre (15, 28) mit auf zwei konzentrischen Kreisen angeordneten mitrotierenden Kühldüsenbohrungen (14, 30) in dem Schneidmesserkopf (5) in Fluidverbindung stehen.

## Claims

1. Granulating device with a cutting knife head (5) for cutting strands of melt into granules in a granulator housing (6), having:
- a perforated plate (7) with die openings (8), from which strands of melt can be extruded into the granulator housing (6),
- a rotating drive shaft (9), which drives the cutting knife head (5), which has at least one cutting knife (10) arranged radially on its outer circumference,
- a first coolant inlet (11) in the granulator housing (6) and an outlet (12) for a mixture of coolant and granules from the granulator housing (6),
- and a second coolant inlet (13) that is supplied independently of the first coolant inlet (11),
**characterized in that**
- the cutting knife head (5) has at least one cooling nozzle bore (14) co-rotating in a radius of rotation, and **in that**
- the second coolant inlet (13) is in fluid connection with the rotating cooling nozzle bore (14) through a coolant chamber (18) and a stationary coolant pipe (15) that is oriented coaxially to the drive shaft (9) and is connected to the granulator housing (6) in a media-tight or coolant-tight manner by a coupling flange (21).

2. Granulating device according to claim 1,
**characterized in that**
the coolant chamber (18), with the second coolant inlet (13) and the stationary coolant pipe (15) oriented coaxially to the drive shaft (9), is flange-mounted to the granulator housing (6) as an add-on unit.

3. Granulating device according to claim 1 or claim 2,
**characterized in that**
the coolant chamber (18) has at least one media-tight rotary feedthrough (19) for the drive shaft (9).

4. Granulating device according to one of the preceding claims,
**characterized in that**
the coolant chamber (18) has an annular wall section (20), wherein the second coolant inlet (13) is located in the wall section (20).

5. Granulating device according to one of the preceding claims,
**characterized in that**
the coolant chamber (18) has a coupling flange (21) towards the granulator housing (6).

6. Granulating device according to claim 5,
**characterized in that**
the coupling flange (21) has a central opening (22) surrounding the drive shaft (9) at a distance.

7. Granulating device according to claim 6,
**characterized in that**
a first end (16) of the coaxial coolant pipe (15) is attached to the central opening (22) in a media-tight or coolant-tight manner.

8. Granulating device according to one of claims 2 to 7,
**characterized in that**
the coaxial coolant pipe (15) extends through the granulator housing (6) to a rear side (23) of the cutting knife head (5).

9. Granulating device according to claim 8,
**characterized in that**
an annular slot (24) is located between a second end (17) of the stationary coaxial coolant pipe (15) and the rear side (23) of the rotating cutting knife head (5).

10. Granulating device according to one of the preceding claims,
**characterized in that**
the inside radius of the stationary coaxial coolant pipe (15) is smaller than or equal to the outside radius of the cutting knife head (5).

11. Granulating device according to one of the preceding claims,
**characterized in that**
the cutting knife head (5) has multiple cutting knives (10) distributed about an outer circumference, and a coolant nozzle bore (14) is associated with each of the cutting knives (10).

12. Granulating device according to one of claims 1 to 11,
**characterized in that**
an axis (25) of the at least one cooling nozzle bore (14) is parallel to the drive shaft (9).

13. Granulating device according to one of the preceding claims,
**characterized in that**
an inclined axis (26) of the at least one cooling nozzle bore (14) has an angle of inclination (a) relative to the drive shaft (9).

14. Granulating device according to one of claims 1 to 11,
**characterized in that**
the granulating device (3, 4) has three coolant inlets (11, 13, 27) that are supplied with coolant independently of one another, of which the coolant chamber (18) has two coolant inlets (13, 27) and each coolant inlet (13, 27) of the coolant chamber (18) is in fluid connection with stationary coolant pipes (15, 28) that are oriented coaxially to one another and coaxially to the drive shaft (9), wherein the coolant pipes (15, 28) are in fluid connection with co-rotating coolant nozzle bores (14, 30) arranged on two concentric circles in the cutting knife head (5).

## Revendications

1. Dispositif de granulation équipé d'une tête à lames de coupe (5) pour désagglomérer des tiges extrudées en granulés dans un carter de granulateur (6), présentant :
- une plaque perforée (7) pourvue d'orifices de buse (8) au travers desquels des tiges extrudées peuvent être pressées dans le carter du granulateur (6),
- un arbre de transmission rotatif (9) qui entraîne la tête à lames de coupe (5), laquelle présente au moins une lame de coupe (10) agencée de manière radiale sur sa circonférence extérieure,
- un premier orifice d'entrée de fluide de refroidissement (11) dans le carter du granulateur (6), et un orifice de sortie (12) d'un mélange composé de fluide de refroidissement et de granulés sortant du carter du granulateur (6),
- et un deuxième orifice d'entrée de fluide de refroidissement (13) alimenté indépendamment du premier orifice d'entrée de fluide de refroidissement (11), **caractérisé en ce que**
- la tête de lames de coupe (5) présente au moins une perforation de buse de refroidissement (14) tournant parallèlement dans un rayon de rotation, et que
- le deuxième orifice d'entrée de fluide de refroidissement (13) est connecté en termes de fluide à la perforation de buse de refroidissement (14) en rotation, par le biais d'une chambre à fluide de refroidissement (18) et d'une conduite de fluide de refroidissement (15) stationnaire, orientée coaxialement par rapport à l'arbre de transmission (9), reliée par une bride séparatrice (21) au carter du granulateur (6) de manière étanche aux milieux ou au fluide de refroidissement.

2. Dispositif de granulation selon la revendication 1,
**caractérisé en ce que**
la chambre de fluide de refroidissement (18), équipée du deuxième orifice d'entrée de fluide de refroidissement (13) et de la conduite de fluide de refroidissement (15) stationnaire orientée coaxialement par rapport à l'arbre de transmission (9), est bridée sur le carter du granulateur (6) en tant que dispositif supplémentaire.

3. Dispositif de granulation selon la revendication 1 ou la revendication 2,
**caractérisé en ce que**
la chambre de fluide de refroidissement (18) présente au moins un passage tournant (19) de l'arbre de transmission (9) étanche aux milieux.

4. Dispositif de granulation selon l'une quelconque des revendications précédentes,
**caractérisé en ce que**
la chambre de fluide de refroidissement (18) présente une section de paroi (20) en forme d'anneau, le deuxième orifice d'entrée de fluide de refroidissement (13) étant agencé dans ladite section de paroi (20).

5. Dispositif de granulation selon l'une quelconque des revendications précédentes,
**caractérisé en ce que**
la chambre de fluide de refroidissement (18) présente une bride de séparation (21) tournée vers le carter du granulateur (6).

6. Dispositif de granulation selon la revendication 5,
**caractérisé en ce que**
la bride de séparation (21) présente un orifice (22) central entourant, séparé d'un espace, l'arbre de transmission (9).

7. Dispositif de granulation selon la revendication 6,
**caractérisé en ce qu'**
une première extrémité (16) de la conduite de fluide de refroidissement (15) coaxiale est fixée sur l'orifice central (22) de manière étanche aux milieux ou au fluide de refroidissement.

8. Dispositif de granulation selon l'une quelconque des revendications 2 à 7,
**caractérisé en ce que**
la conduite de fluide de refroidissement (15) coaxiale s'étend au travers du carter du granulateur (6) jusqu'à une face arrière (23) de la tête à lames de coupe (5).

9. Dispositif de granulation selon la revendication 8,
**caractérisé en ce qu'**
une fente en forme d'anneau (24) est agencée entre une deuxième extrémité (17) de la conduite de fluide de refroidissement (15) stationnaire coaxiale et la face arrière (23) de la tête à lames de coupe (5) en rotation.

10. Dispositif de granulation selon l'une quelconque des revendications précédentes,
**caractérisé en ce que**
le rayon intérieur de la conduite de fluide de refroidissement (15) stationnaire coaxiale est plus petit ou égal au rayon extérieur de la tête à lames de coupe (5).

11. Dispositif de granulation selon l'une quelconque des revendications précédentes,
**caractérisé en ce que**
la tête de lames de coupe (5) présente plusieurs lames de coupe (10) réparties sur une circonférence extérieure et une perforation de buse de refroidissement (14) est associée à chacune des lames de coupe (10).

12. Dispositif de granulation selon l'une quelconque des revendications 1 à 11,
**caractérisé en ce qu'**
un axe (25) de l'au moins une perforation de buse de refroidissement (14) est orienté parallèle à l'arbre de transmission (9).

13. Dispositif de granulation selon l'une quelconque des revendications précédentes,
**caractérisé en ce qu'**
un axe adéquat (26) de l'au moins une perforation de buse de refroidissement (14) présente un angle d'inclinaison (a) par rapport à l'arbre de transmission (9).

14. Dispositif de granulation selon l'une quelconque des revendications 1 à 11,
**caractérisé en ce que**
ledit dispositif de granulation (3, 4) présente trois orifices d'entrée de fluide de refroidissement (11, 13, 27) indépendants les uns des autres, alimentés en fluide de refroidissement, dont deux orifices d'entrée de fluide de refroidissement (13, 27) appartiennent à la chambre de fluide de refroidissement (18) et chaque orifice d'entrée de fluide de refroidissement (13, 27) de la chambre de fluide de refroidissement (18) est relié en termes de fluide à des conduites de fluide de refroidissement (15, 28) stationnaires, orientées coaxiales l'une par rapport à l'autre et coaxiales par rapport à l'arbre de transmission (9), lesdites conduites de fluide de refroidissement (15, 28), qui sont équipées de perforations de buse de refroidissement (14, 30) en rotation parallèle et agencées sur deux cercles concentriques, étant reliées en termes de fluide à la tête à lames de coupe (5).
